# EUROPÄISCHE PATENTSCHRIFT

(11) **EP 0 906 732 B1**
(45) Veröffentlichungstag und Bekanntmachung des Hinweises auf die Patenterteilung: **24.10.2001**
(21) Anmeldenummer: 98116167.2
(22) Anmeldetag: 27.08.1998
(51) Int. Cl.: A44B 11/12, B60P 7/08

(54) **Vorrichtung zum Spannen von Gurten**
Buckle for tensioning straps
Boucle de tension de sangles

(30) Priorität: 02.10.1997 DE 19743614
(43) Veröffentlichungstag der Anmeldung: 07.04.1999
(73) Patentinhaber: Franz Miederhoff oHG, D-59846 Sundern (DE)
(72) Erfinder: Than,Johannes, D-59846 Sundern-Endorf (DE)
(74) Vertreter: Schröter & Haverkamp

(56) Entgegenhaltungen:
- GB-A- 914 085
- GB-A- 966 113
- GB-A- 2 262 304
- US-A- 4 987 653

## Beschreibung

Die Erfindung betrifft eine Vorrichtung zum Spannen von Gurten (Gurtspannvorrichtung), die im wesentlichen aus einer Gurtaufnahme und einem um einen Bolzen schwenkbar an der Gurtaufnahme angelenkten, verriegelbaren Spannhebel besteht, in welcher Gurtaufnahme ein zwei Gurtabschnitte bildender Gurt aufgenommen ist, wobei einer der beiden Gurtabschnitte durch die Gurtspannvorrichtung spannbar ist und der andere Gurtabschnitt zur Längeneinrichtung des zu spannenden Gurtabschnittes dient, an welchem Spannhebel ein Umlenksteg zum Umlenken des Gurtes zwecks Ausbildung der beiden Gurtabschnitte angeordnet ist, die gemeinsam um einen Bolzen geführt sind, so daß ein Spannen des Gurtabschnittes durch Verschwenken des Spannhebels aus seiner Offenstellung in seine verriegelte Geschlossenstellung erfolgt, und in welcher Gurtaufnahme ein unmittelbar auf einen Gurtabschnitt wirkendes, einer Lockerung des gespannten Gurtes entgegenwirkendes Antischlupfglied angeordnet ist, wobei beide Gurtabschnitte innerhalb der Gurtaufnahme zumindest in einem Abschnitt übereinanderliegend und aneinandergrenzend angeordnet sind.

Eine Gurtspannvorrichtung ist beispielsweise aus der GB 2 061 436 A1 bekannt. Solche Gurtspannvorrichtungen werden als Seitenplanenspanner in Seitenspannplanensystemen im Nutzfahrzeugbereich eingesetzt. Die vorbekannten Gurtspannvorrichtungen bestehen im wesentlichen aus einer U-förmig ausgebildeten Gurtaufnahme und einem daran angelenkten schwenkbaren Spannhebel. Mit Abstand zum Drehpunkt des Spannhebels ist diesem ein Umlenksteg zum Ausbilden einer Schlaufe eines eingelegten Gurtes zugeordnet, wodurch zwei Gurtabschnitte gebildet sind. Die beiden Gurtabschnitte treten im Bereich des dem Drehpunkt des Spannhebels gegenüberliegenden Endes der Gurtaufnahme in diese ein bzw. aus dieser aus. An dem freien Ende des zu spannenden Gurtabschnittes (Innengurt) ist ein Haken angebracht. Der andere Gurtabschnitt (Außengurt) dient zum Einrichten der Länge des zu spannenden Innengurtes. Während die Gurtspannvorrichtung an der Seitenplane eines Nutzfahrzeuges befestigt ist, dient der Haken zum Einhaken des Innengurtes an dem Chassi eines Nutzfahrzeuges, etwa eines Lkws, eines Aufliegers oder eines Eisenbahnwagons. Zum Spannen der gesamten Seitenplane weist diese im ihren unteren Endbereich eine Vielzahl voneinander beabstandeter Gurtspannvorrichtungen auf.

Gespannt wird ein solcher Innengurt, indem zunächst der Haken chassiseitig eingehakt wird. Anschließend wird der Außengurt zum Straffen des Innengurtes stramm gezogen, woraufhin der Spannhebel aus seiner aufgeschwenkten Offenstellung in seine eingeschwenkte, den Innengurt spannende Geschlossenstellung bewegt wird. Da beide Gurte um einen Führungsbolzen, um welchen der Spannhebelarm schwenkbar angelenkt ist, geführt sind, wird der mit dem Haken festgelegte Innengurt gespannt. Eine Gurtfixierung erfolgt insbesondere dadurch, daß der im Bereich der Führungsrolle außenliegende Gurt gegen den innenliegenden Gurt gepreßt wird, so daß ein Gurtnachrutschen beim Spannen verhindert ist. Ein solcher Spannhebel kann entweder mit einer dem Spannhebel zugeordneten Verriegelungskante, die unter eine angelenkte Schließe greift oder durch einen Schiebeverschluß in ihrer Geschlossenstellung fixiert sein.

Mit Hilfe einer solchen Gurtspannvorrichtung lassen sich Gurte der Hebelwirkung des Spannhebels entsprechend soweit spannen, daß diese auch für die beschriebenen Seitenspannplanensysteme eingesetzt werden können. Es hat sich jedoch herausgestellt, daß sich mit derartigen Vorrichtungen gespannte Seitenplanen beim Fahren lockern können. Ein sich lockernder gespannter Innengurte kann im ungünstigen Fall dazu führen, daß der ursprünglich chassiseitig eingehänkte Haken aus seiner verhakten Stellung herausfällt und somit bei einem weiteren Betrieb eine erhebliche Gefahr für im Flatterbereich des Gurtes befindliche Personen oder Fahrzeuge, insbesondere auch entgegenkommende Fahrzeuge darstellt. Ferner beginnt bei einer Lockerung der Gurtspannvorrichtungen auch die gespannte Plane in einem stärkeren Ausmaß zu flattern, so daß diese einem größeren Verschleiß unterworfen ist. Grundsätzlich könnte einem solchen Lockern der gespannten Gurte dadurch begegnet werden, daß in zeitlichen Abständen sämtliche Gurtspannvorrichtungen manuell nachgespannt werden. Jedoch ist eine solche Vorgehensweise unzweckmäßig.

Aus der GB 2 262 304 A ist eine gattungsgemäße Gurtspannvorrichtung bekannt. Bei dieser Gurtspannvorrichtung ist zum Verhindern eines Lokkerns der Gurte beim Fahren in der Gurtaufnahme ein U-förmig ausgebildetes Federelement als Antischlupfglied angeordnet ist. Die Außenseiten der beiden Schenkel des Federelementes drücken unterstützt durch die Federkraft des Federelementes im geschlossenen Zustand der Gurtspannvorrichtung gegen die Oberseite lediglich des zu spannenden Gurtabschnittes. Die Andruckfläche der Schenkel des Feder-elementes sind in einem Gurtabschnitt vorgesehen, in dem dieser ohne an einem Widerlager anzuliegen, frei gespannt ist. Somit wirkt zusätzlich zu der Verklemmung der beiden Gurtabschnitte in der Umlenkeinrichtung die Kraft des bei der geschlossenen Gurtspannvorrichtung von dem Federelement auf dem gespannten Gurt wirkende Federkraft, durch die bei einer Zugbeanspruchung des gespannten Gurtes einer unerwünschten Lockerung vorgebeugt sein soll. Die von dem Federelement ausgehende Spreizkraft soll durch einen zwischen dem Federelement und dem Gurt sich einstellenden Reibschluß einer Gurtlockerung vorbeugen.

Um jedoch eine ausreichende Kraft zum Erzielen des gewünschten Reibschlusses auf den Gurt wirkend vorsehen zu können, muß die von dem Federelement ausgehende Kraft entsprechend groß sein. Die zum Schließen einer solchen Gurtspannvorrichtung benötigte Kraft setzt sich zum einen aus der zum Spannen des Gurtes und der zum Zusammendrücken des Federelementes notwendigen Kraft zusammen. Die Folge ist, daß eine solche Gurtspannvorrichtung nur schwer, wenn überhaupt schließbar ist. Darüber hinaus kann eine solche Gurtspannvorrichtung aufgrund der hohen, von dem Federelement auf den Spannhebel wirkenden Kraft eine Gefahrenquelle für einen Benutzer darstellen, da bei einem unachtsamen Öffnen der Spannhebel unter dem Einfluß des Federelementes aufschnellen kann. Ein unbeabsichtigtes Aufspringen einer solchen Gurtspannvorrichtung während der Fahrt hat zur Folge, daß der Spannhebel seitlich von dem Fahrzeug abragt und dadurch zumeist die zulässige Maximalbreite des Fahrzeuges überschritten ist. Wird die Federkraft des Federelementes so dimensioniert, daß diese aufgezeigten Gefahren minimiert sind, so ist der auf den Gurt ausgeübte Druck, der zu einem Reibschluß zwischen dem Federelement und dem Gurtabschnitt führen soll, nicht groß genug, um ein Lockern der Gurtspannvorrichtung bei einem Flattern des Gurtes oder einer Plane verhindern zu können.

Ausgehend von dem zuletzt dargelegten Stand der Technik liegt der Erfindung daher die Aufgabe zugrunde, eine gattungsgemäße Vorrichtung zum Spannen von Gurten vorzuschlagen, bei welcher die Gurtfixierung zum Vermeiden eines nachträglichen sich Lockerns verbessert ist.

Diese Aufgabe wird erfindungsgemäß dadurch gelöst, daß die Gurtspannvorrichtung ein sich in der Geschlossenstellung des Spannhebels einerseits an dem Spannhebel und anderseits an einem in dem Abschnitt der übereinanderliegenden Gurtabschnitte angeordneten und der Gurtaufnahme zugeordneten Widerlager abstützendes, weitestgehend starres Druckstück als Antischlupfglied aufweist, dessen wirksame Höhe geringfügig größer als der lichte Abstand zwischen einem dem Spannhebel und dem der Gurtaufnahme zugeordneten Widerlager in der verriegelten Geschlossenstellung des Spannhebels abzüglich der Dicke der zu verklemmenden Gurtabschnitte ist, so daß in der Geschlossenstellung des Spannhebels durch das Druckstück die übereinanderliegenden Gurtabschnitte verklemmt zwischen dem sich am Spannhebel abstützenden Druckstück und dem Widerlager fixiert sind.

Durch Vorsehen eines zwischen zwei starren Widerlagern angeordneten Druckstückes, welches in der Geschlossenstellung und somit in der einen Gurtabschnitt spannenden Stellung des Spannhebels auf die in der Gurtaufnahme befindlichen beiden übereinanderliegenden und in diesem Abschnitt aneinandergrenzenden Gurtabschnitte drückt, ist ein wirksames Mittel geschaffen, mit dem ein nachträgliches Lockern des gespannten Gurtabschnittes verhindert ist. Als Druckkörper findet ein im wesentlichen starrer Körper Verwendung, dessen wirksame Höhe geringfügig größer als der lichte Abstand zwischen dem dem Spannhebel auf dem der Gurtaufnahme zugeordneten Widerlager in der verriegelten Geschlossenstellung des Spannhebels abzüglich der Dichte der zu verklemmenden Gurtabschnitte ist. Als starrer Körper werden im Rahmen dieser Ausführungen solche Körper angesehen, die grundsätzlich unnachgiebig sind, jedoch gegebenenfalls mit einer Gummierung beschichtet sein können. Die Verklemmung durch das Druckstück findet somit erst unmittelbar beim Verriegeln des Spannhebels statt, so daß eine eigenständige Gurtfixierung im Bereich der Führungsrolle nicht behindert ist.

Ausgenutzt werden beim Gegenstand der Erfindung insbesondere auch die nachgiebigen Materialeigenschaften eines solchen üblicherweise aus textilem Material bestehenden Gurtes. Das Druckstück selbst wird in der Geschlossenstellung und somit beim Schließen des Spannhebels oberseitig in den oberen, nicht zu spannenden Gurtabschnitt, eingedrückt. Als Widerlager zu dem sich an dem Spannhebel abstützenden Druckstück zum Ausüben des auf den oberen Gurt befindlichen Druckes dient ein der Gurtaufnahme zugeordnetes Widerlager, welches zweckmäßigerweise der Boden der Gurtaufnahme selbst ist. Somit werden beide Gurtabschnitte im Bereich des Druckstückes gegeneinander gepreßt und gemeinsam in der durch den Boden der Gurtaufnahme und das Druckstück gebildeten Klemme gehalten. Diese sehr effektive Verklemmung der beiden Gurtabschnitte wird dadurch begünstigt, daß sich in diesem Bereich die beiden Gurtabschnitte im Falle einer Lockerung gegeneinander bewegen müßten, was jedoch zusätzlich durch die Oberlächenrauhigkeit der aneinander grenzenden Gurtabschnitte behindert ist.

Mit der erfindungsgemäßen Gurtklemme ist eine Gurtspannvorrichtung geschaffen, die insbesondere solchen Lockerungserscheinungen entgegengewirkt, die aus einer Wechselfolge von Gurt-spannenden und Gurtentspannenden Ereignissen resultieren.

In einer weiteren Ausgestaltung ist vorgesehen, daß das Druckstück ein mit Hilfe von zwei Schwenkarmen an der Gurtaufnahme schwenkbar angelenkter Körper ist. Zweckmäßiger Weise sind die beiden Schwenkarme an demjenigen Bolzen angelenkt, an dem auch der Spannhebel angelenkt ist. Eine solche Ausgestaltung hat insbesondere Montagevorteile zur Folge, da zum Einsetzen des Spannhebels in die Gurtaufnahme zusätzlich lediglich die beiden freien Enden der Schwenkarme des Druckstückes beim Einschieben eines Haltebolzens eingesetzt werden müssen. Überdies bringt die schwenkbare Anordnung eines solchen Druckstückes Vorteile beim Einfädeln des Gurtes bzw. seiner Gurtabschnitte mit sich.

Als Druckstück wird bevorzugt ein etwa zylindrischer Körper verwendet, an dessen beiden Stirnflächen die beiden Schwenkarme angeordnet sind. Grundsätzlich ist die Oberfläche eines solchen Druckstückes unnachgiebig ausgebildet, um beim Schließen des Spannhebels die beiden übereinanderliegenden Gurtabschnitte entsprechend verklemmen zu können. Es ist jedoch auch möglich, diese mit einer unter Druck materialelastisch reagierenden Beschichtung zu versehen, etwa zu gummieren.

In einer vorteilhaften Ausgestaltung ist ein solches als Schwinge vorgesehenes Druckstück im Bereich des ersten Drittels bezogen auf die Länge des Spannhebels angeordnet. Mit dem Spannhebel ist dann ohne übermäßige Kraftanstrengung der benötigte Druck beim Schließen des Spannhebels auf die Gurtabschnitte ausübbar. In einer solchen Ausgestaltung stützt sich das Druckstück spannhebelseitig zweckmäßiger Weise an dem Umlenksteg ab. Es ist dann gewährleistet, daß durch das Druckstück nicht nur die beiden übereinanderliegenden Gurtabschnitte in der durch Druckstück und Gurtaufnahme gebildeten Klemme gehalten sind, sondern daß zusätzlich der innenliegende Gurtabschnitt innenseitig gegen den Umlenksteg verklemmt gehalten ist.

In einer besonders bevorzugten Verwendung einer solchen Gurtspannvorrichtung ist diese als Seitenplanenspanner in einem Seitenspannplanensystem eingesetzt.

Weitere Vorteile und Weiterbildungen der Erfindung ergeben sich aus den übrigen Unteransprüchen sowie aus der nachfolgenden Beschreibung eines Ausführungsbeispieles. Es zeigen:
- **Fig. 1:**: Eine dreidimensionale Ansicht auf eine geöffnete Gurtspannvorrichtung und
- **Fig. 2**: einen Längsschnitt durch die geschlossene Gurtspannvorrichtung der Figur 1.

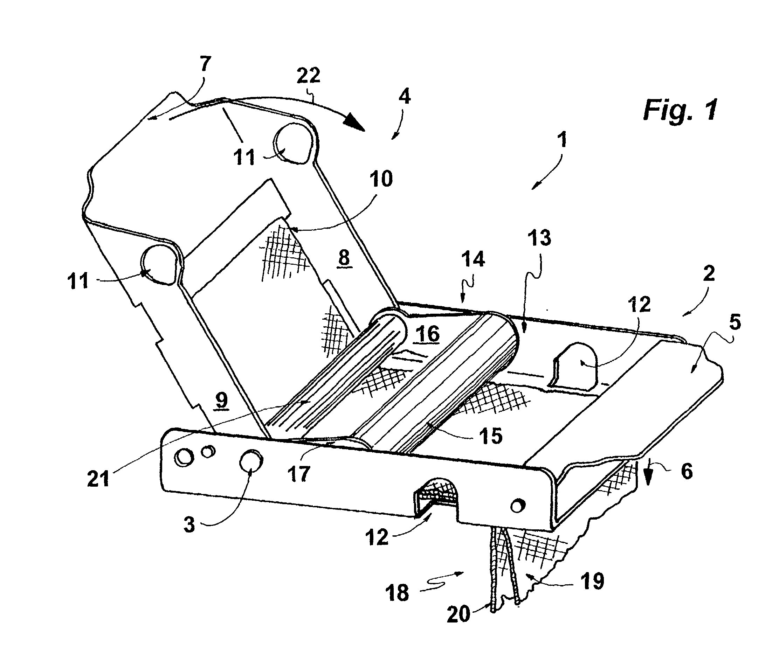

Eine Gurtspannvorrichtung 1 umfaßt eine Gurtaufnahme 2, an der mittels eines Bolzens 3 ein Spannhebel 4 schwenkbar angelenkt ist. Die Gurtaufnahme 2 ist im Querschnitt U-förmig ausgebildet und weist an ihrem dem Bolzen 3 gegenüberliegenden Ende eine schwenkbar an der Gurtaufnahme 2 angelenkte Schließe 5 auf. Die Schließe 5 ist mit einer Feder in der in Figur 1 gezeigten Position gehalten und kann gegen die Kraft der Feder gemäß dem Pfeil 6 zum Öffnen der gespannten Gurtspannvorrichtung 1 betätigt werden.

Der an dem Bolzen 3 angelenkte Spannhebel 4 trägt an seinem freien, in Figur 1 nach oben ragenden Ende eine Verriegelungskante 7, die in der Geschlossenstellung der Gurtspannvorrichtung 1 unter die vordere Kante der Schließe 5 greift, wodurch der Spannhebel 4 verriegelt ist. Der Spannhebel 4 umfaßt zwei an dem Bolzen 3 angelenkte Spannhebelarme 8, 9, die beide durch einen Umlenksteg 10 miteinander verbunden sind. In der Geschlossenstellung des Spannhebels 4 sind miteinander fluchtend in die Spannhebelarme 8, 9 sowie in die Seitenwangen der Gurtaufnahme 2 Verschlußöffnungen 11, 12 zum Durchführen eines zusätzlichen Verschlusses, etwa eines Zollverschlusses, eingebracht.

Im Innenraum 13 der Gurtaufnahme 2 ist ein Druckkörper 14 angeordnet, der im wesentlichen aus einem Zylinderstück 15 und zwei stirnseitig angeordneten Schwenkarmen 16, 17 besteht. Die Schwenkarme 16, 17 weisen an ihrem freien Ende jeweils eine Anlenkbohrung auf, durch die der Bolzen 3 hindurchgreift. Der Druckkörper 14 stellt somit eine am Bolzen 3 angelenkte Schwinge dar.

In die Gurtspannvorrichtung 1 ist ein Gurt 18 als Schlinge den Umlenksteg 10 umgebend eingelegt. Durch den Umlenksteg 10 ist der Gurt 18 zwei Gurtabschnitte, nämlich den Gurtabschnitt 19 und den Gurtabschnitt 20 unterteilt. Bei einer Verwendung der Gurtspannvorrichtung 1 als Seitenplanenspanner in einem Seitenspannplanensystem ist der Gurtabschnitt 19 der Außengurt und der Gurtabschnitt 20 der an der Plane anliegende Innengurt. Die Gurtabschnitte 19, 20 sind um eine Führungsrolle 21 geführt, so daß beim Schließen der Gurtspannvorrichtung 1 durch Spannen des Innengurtes 20 eine Verklemmung des Außengurtes 19 an der Führungsrolle 21 erfolgt. An dem freien Ende des Innengurtes 20 ist zum chassiseitigem Befestigen dieses Gurtendes ein in Figur 1 nicht dargestellter Haken angeordnet. Die Gurtspannvorrichtung 1 selbst ist im unteren Bereich einer zu spannenden Seitenplane befestigt. Durch die in der Gurtspannvorrichtung 1 aufgenommene Schlaufe des Gurtes 18 dient der Außengurt 19 zum Straffen des Innengurtes 20 bevor der Spannhebel 7 gemäß der Pfeilrichtung 22 zum Spannen des Innengurtes 20 betätigt wird.

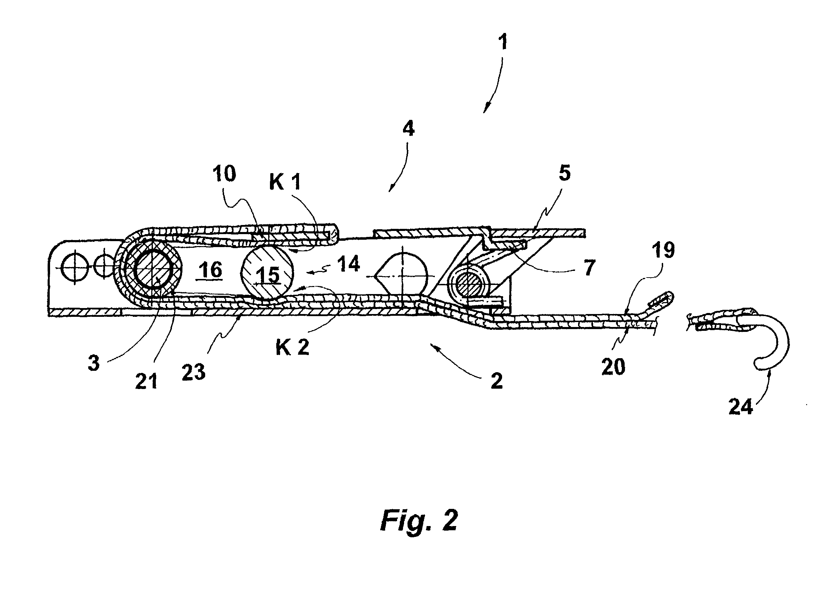

Die geschlossene Gurtspannvorrichtung 1 ist einem Längsschnitt in Figur 2 dargestellt. Aus Figur 2 wird ersichtlich, daß die Verriegelungskante 7 des Spannhebels 4 unter die vordere Kante der Schließe 5 greift, so daß der Spannhebel 4 in dieser Position verriegelt gehalten ist. In dieser Stellung erfolgt eine Verklemmung des Gurtabschnittes 19 zwischen dem Druckkörper 14 und dem Umlenksteg 10 des Spannhebels 4 im Bereich der Klemmstelle K1 sowie eine Verklemmung der beiden Gurtabschnitte 19, 20 durch das Druckstück 14 und den Boden 23 der Gurtaufnahme 2 im Bereich der Klemmstelle K2. Dabei wird der Druckkörper 14 mit seinem Zylinderstück 15 geringfügig in die Gurtabschnitte 19, 20 eingepreßt. Aus dieser Figur wird erkennbar, daß eine wirksame Fixierung der Gurtabschnitte 19, 20 durch den Druckkörper 14 und die beiden Widerlager 10, 23 gegeben ist. Zu diesem Zweck ist der Außendurchmesser des Zylinderstückes 15 und somit seine wirksame Höhe so bemessen, daß diese geringfügig größer als die lichte Weite zwischen der Innenseite des Umlenksteges 10 und der Innenseite des Bodens 23 in der verriegelten Geschlossenstellung des Spannhebels 4 abzüglich der dreifachen Gurtdicke ist.

Der Druckkörper 14 ist bei dem in den Figuren dargestellten Ausführungsbeispiel ein einstückiges, spritzgegossenes Kunststoffteil. In einem nicht dargestellten Ausführungsbeispiel ist als Druckkörper ein solcher vorgesehen, der ein oberflächlich beschichtetes Zylinderstück aus Metall vorsieht, dessen Schwenkarme mit den Zylinderstück vernietet oder verschweißt sind.

Da die Gurtspannvorrichtung 1 zur Verwendung als Seitenplanenspanner in einem Seitenspannplanensystem vorgesehen ist, wobei die Gurtaufnahme 2 planenseitig befestigt ist, ist an dem freien Ende des Innengurtes 20 ein Drahthaken 24 zum chassiseitigen Einhängen angeordnet.

### Zusammenstellung der Bezugszeichen

- 1: Gurtspannvorrichtung
- 2: Gurtaufnahme
- 3: Bolzen
- 4: Spannhebel
- 5: Schließe
- 6: Pfeil
- 7: Verriegelungskante
- 8: Spannhebelarm
- 9: Spannhebelarm
- 10: Umlenksteg
- 11: Öffnung
- 12: Öffnung
- 13: Innenraum der Gurtaufnahme
- 14: Druckkörper
- 15: Zylinderstück
- 16: Schwenkarm
- 17: Schwenkarm
- 18: Gurt
- 19: Gurtabschnitt, Außengurt
- 20: Gurtabschnitt, Innengurt
- 21: Führungsrolle
- 22: Pfeilrichtung
- 23: Boden der Gurtaufnahme
- 24: Drahthaken

- K1: Klemmstelle
- K2: Klemmstelle

## Patentansprüche

1. Vorrichtung zum Spannen von Gurten (Gurtspannvorrichtung), die im wesentlichen aus einer Gurtaufnahme (2) und einem um einen Bolzen (3) schwenkbar an der Gurtaufnahme (2) angelenkten, verriegelbaren Spannhebel (4) besteht, in welcher Gurtaufnahme (2) ein zwei Gurtabschnitte (19, 20) bildender Gurt (18) aufgenommen ist, wobei einer der beiden Gurtabschnitte (20) durch die Gurtspannvorrichtung (1) spannbar ist und der andere Gurtabschnitt (19) zur Längeneinrichtung des zu spannenden Gurtabschnittes (20) dient, an welchem Spannhebel (4) ein Umlenksteg (10) zum Umlenken des Gurtes (18) zwecks Ausbidung der beiden Gurtabschnitte (19, 20) angeordnet ist, die gemeinsam um den Bolzen (3) als Umlenkeinrichtung geführt sind, so daß ein Spannen des Gurtabschnittes (20) durch Verschwenken des Spannhebels (4) aus seiner Offenstellung in seine verriegelte Geschlossenstellung erfolgt, und in welcher Gurtaufnahme (2) ein unmittelbar auf einen Gurtabschnitt (19) wirkendes, einer Lockerung des gespannten Gurtes (20) entgegenwirkendes Antischlupfglied (14) angeordnet ist und daß beide Gurtabschnitte (19, 20) innerhalb der Gurtaufnahme (2) zumindest in einem Abschnitt übereinanderliegend und aneinandergrenzend angeordnet sind, **dadurch gekennzeichnet, daß** die Gurtspannvorrichtung (1) ein sich in der Geschlossenstellung des Spannhebels (4) einerseits an dem Spannhebel (4) und anderseits an einem in dem Abschnitt der übereinanderliegenden Gurtabschnitte (19, 20) angeordneten und der Gurtaufnahme (2) zugeordneten Widerlager (23) abstützendes, weitestgehend unnachgiebiges Druckstück (14) als Antischlupfglied aufweist, dessen wirksame Höhe geringfügig größer als der lichte Abstand zwischen einem dem Spannhebel (4) und dem der Gurtaufnahme (2) zugeordneten Widerlager (10 bzw. 23) in der verriegelten Geschlossenstellung des Spannhebels (4) abzüglich der Dicke der zu verklemmenden Gurtabschnitte (19, 20) ist, so daß in der Geschlossenstellung des Spannhebels (4) durch das Druckstück (14) die übereinanderliegenden Gurtabschnitte (19, 20) verklemmt zwischen dem sich am Spannhebel (4) abstützenden Druckstück (14) und dem Widerlager (23) fixiert sind.

2. Gurtspannvorrichtung nach Anspruch 1, **dadurch gekennzeichnet, daß** an dem Druckstück (14) zwei schwenkbar an der Gurtaufnahme (2) angelenkte Schwenkarme (16, 17) angeordnet sind und daß zwischen dem dem Spannhebel (4) zugeordneten Widerlager (10) und dem Druckstück (14) ein Gurtabschnitt (19) geführt ist.

3. Gurtspannvorrichtung nach Anspruch 2, **dadurch gekennzeichnet, daß** die Schwenkarme (16, 17) an einem die Gurtaufnahme (2) querenden Bolzen (3) gehalten sind, an welchem Bolzen (3) auch der Spannhebel (4) angelenkt ist und welcher Bolzen(3) als Umlenkeinrichtung für die beiden umzulenkenden Gurtabschnitte (19, 20) dient.

4. Gurtspannvorrichtung nach Anspruch 2 oder 3, **dadurch gekennzeichnet, daß** als Druckstück (14) ein zylindrischer Körper (15) vorgesehen ist, dessen Längsachse quer zur Längserstreckung der Gurtaufnahme (2) angeordnet ist

5. Gurtspannvorrichtung nach Anspruch 4, **dadurch gekennzeichnet, daß** das Druckstück mit einem reibungserhöhenden Mittel beschichtet ist

6. Gurtspannvorrichtung nach einem der Ansprüche 2 bis 5, **dadurch gekennzeichnet, daß** das Druckstück (14) im Bereich der ersten Hälfte, insbesondere im Bereich des ersten Drittels, bezogen auf die Länge des Spannhebels (4) gemessen von seiner Schwenkachse auf die Gurtabschnitte (19, 20) wirkend angeordnet ist.

7. Verwendung einer Gurtspannvorrichtung nach einem der Ansprüche 1 bis 6, **dadurch gekennzeichnet, daß** die Gurtspannvorrichtung (1) als Seitenplanenspanner in einem Seitenplanenspannsystem eingesetzt ist, wobei der Gurtaufnahme (2) Befestigungsmittel zum Anbringen der Gurtspannvorrichtung (1) an einer Plane und dem freien Ende des zu spannenden Gurtabschnittes (20) ein Haken (24) zum chassiseitigen Einhaken desselben zugeordnet sind.

## Claims

1. Arrangement for tensioning belts (belt tensioning arrangement), which substantially comprises a belt receiver (2) and a lockable tensioning lever (4), which is mounted on the belt receiver (2) so as to be pivotable about a pin (3), a belt (18) being accommodated in said belt receiver (2) and forming two belt portions (19, 20), one of the two belt portions (20) being tensionable by the belt tensioning arrangement (1), and the other belt portion (19) serving as the length adjusting means for the belt portion (20) to be tensioned, a guide web (10) being disposed on said tensioning lever (4) in order to guide the belt (18) for the purpose of forming the two belt portions (19, 20) which are jointly guided around the pin (3) as the guide means, so that the belt portion (20) is tensioned by pivoting the tensioning lever (4) from its open position into its locked closed position, and in which belt receiver (2) is disposed an anti-slip member (14), which acts directly on a belt portion (19) and prevents a loosening of the tensioned belt (20), and in that both belt portions (19, 20) are disposed internally of the belt receiver (2) so as to lie above each other and abut against each other at least in one portion, **characterised in that** the belt tensioning arrangement (1) has a largely non-resilient pressing component (14) as the anti-slip member, which component is supported, in the closed position of the tensioning lever (4), on the tensioning lever (4), on the one hand, and on an abutment (23), on the other hand, which abutment is disposed in the portion of the belt portions (19, 20) lying one above the other and is associated with the belt receiver (2), the effective height of said anti-slip member being slightly greater than the unobstructed spacing between an abutment (10 or 23 respectively), which is associated with the tensioning lever (4) and the belt receiver (2), in the locked closed position of the tensioning lever (4), minus the thickness of the belt portions (19, 20) to be clamped, so that, in the closed position of the tensioning lever (4), the belt portions (19, 20) lying one above the other are secured by the pressing component (14) by being clamped between the pressing component (14), which is supported on the tensioning lever (4), and the abutment (23).

2. Belt tensioning arrangement according to claim 1, **characterised in that** two pivotal arms (16,17), which are pivotably mounted on the belt receiver (2), are disposed on the pressing component (14), and **in that** a belt portion (19) is guided between the abutment (10), which is associated with the tensioning lever (4), and the pressing component (14).

3. Belt tensioning arrangement according to claim 2, **characterised in that** the pivotal arms (16, 17) are retained on a pin (3), which passes through the belt receiver (2), and on which pin (3) the tensioning lever (4) is also pivotally mounted, and which pin (3) serves as the guiding means for the two belt portions (19, 20) to be guided.

4. Belt tensioning arrangement according to claim 2 or 3, **characterised in that** a cylindrical body (15) is provided as the pressing component (14), the longitudinal axis of which body is disposed transversely relative to the longitudinal extent of the belt receiver (2).

5. Belt tensioning arrangement according to claim 4, **characterised in that** the pressing component is coated with a friction-increasing means.

6. Belt tensioning arrangement according to one of claims 2 to 5, **characterised in that** the pressing component (14) is disposed in the region of the first half, more especially in the region of the first third, of the length of the tensioning lever (4), when measured from its pivotal axis, so as to act on the belt portions (19, 20).

7. Use of a belt tensioning arrangement according to one of claims 1 to 6, **characterised in that** the belt tensioning arrangement (1) is inserted as the lateral cover tensioner in a lateral cover tensioning system, mounting means being associated with the belt receiver (2) for attaching the belt tensioning arrangement (1) to a cover, and a hook (24) being associated with the free end of the belt portion (20) to be tensioned for hooking said portion in position on the side of the chassis.

## Revendications

1. Boucle de tension de sangle, constituée essentiellement d'un support de sangle (2), d'un levier de tension (4) verrouillable articulé de manière pivotante par un axe (3) sur le support de sangle (2) dans lequel passe une sangle (18) formée de deux sections (19, 20), l'une des deux sections (20) pouvant être mise sous tension par la boucle de tension (1), l'autre section de sangle (19) servant à régler la longueur de la partie de sangle à tendre (20), le levier de tension (4) comportant une languette de renvoi (10) destinée à replier la sangle (18) pour former les deux sections (19, 20) qui passent toutes deux sur l'axe (3) faisant office de disposition de renvoi, de sorte que la mise sous tension de la section de sangle (20) s'effectue en faisant pivoter le levier de tension (4) de la position ouverte vers la position fermée et verrouillée, et le support de sangle (2) possédant un élément anti-glissement (14) agissant directement sur une section de sangle (19) pour éviter le desserrage de la sangle (20) tendue, les deux sections de sangle (19, 20) dans le support de sangle (2) étant, au moins sur une section, disposées l'une sur l'autre, de manière à se toucher, **caractérisé en ce que** la boucle de tension de sangle (1) présente un élément de pression (14) essentiellement rigide faisant office de pièce anti-friction qui s'appuie d'une part sur le levier de tension (4) lorsque ce dernier est en position fermée et d'autre part sur une butée (23) placée sur le support de sangle (2), dans la zone où les deux sections de sangle (19, 20) sont l'une sur l'autre, élément de pression dont la hauteur effective est légèrement plus grande que l'intervalle hors tout existant entre le levier de tension (4) et la butée (10 ou 23) disposée sur le support de sangle (2), lorsque le levier de tension (4) est en position verrouillée, minorée de l'épaisseur des sections de sangle (19, 20) à coincer, de sorte que, lorsque le levier de tension (4) est en position fermée par l'action de l'élément de pression, les sections de sangle (19, 20) superposées sont coincées par l'élément de pression (14) qui s'appuie sur le levier de tension (4) et la butée (23).

2. Boucle de tension de sangle selon la revendication 1, **caractérisée en ce que** l'élément de pression (14) présente deux bras oscillants (16, 17) articulés de manière pivotante sur le support de sangle (2) et **en ce qu'**une section de sangle (19) est enfilée entre la butée (10) se trouvant sur le levier de tension (4) et l'élément de pression (14).

3. Boucle de tension de sangle selon la revendication 2, **caractérisée en ce que** les bras articulés (16, 17) sont maintenus par un axe (3) qui traverse le support de sangle (2), axe (3) sur lequel est également articulé un levier de tension (4) et axe (3) faisant office de dispositif de renvoi pour le changement de direction des deux sections de sangle (19, 20)

4. Boucle de tension de sangle selon la revendication 2 ou 3, **caractérisée en ce que** l'élément de pression (14) est un cylindre (15) dont l'axe longitudinal est perpendiculaire à l'orientation longitudinale du support de sangle (2).

5. Boucle de tension de sangle selon la revendication 4, **caractérisée en ce que** l'élément de pression est revêtu d'un matériau augmentant la friction.

6. Boucle de tension de sangle selon l'une des revendications 2 à 5, **caractérisée en ce que** l'élément de pression (14) est disposé pour agir sur les sections de sangle (19, 20) dans la zone correspondant à la première moitié, notamment dans la zone du premier tiers de la longueur du levier de tension (4) mesurée à partir de son axe de rotation.

7. Utilisation d'une boucle de tension de sangle selon l'une des revendications 1 à 6, **caractérisée en ce que** la boucle de tension de sangle (1) est utilisée pour tendre une bâche latérale dans le cadre d'un système de tension de bâches latérales, le support de sangle (2) présentant des moyens de fixation afin de fixer la boucle de tension de sangle (1) sur une bâche et à l'extrémité libre de la section de sangle (20) à tendre qui comporte un crochet (24) destiné à être accroché du côté châssis.
